# EUROPÄISCHE PATENTSCHRIFT

(11) **EP 1 029 871 B1**
(45) Veröffentlichungstag und Bekanntmachung des Hinweises auf die Patenterteilung: **28.05.2003**
(21) Anmeldenummer: 00102138.5
(22) Anmeldetag: 07.02.2000
(51) Int. Cl.: C08B 37/16, B01J 27/26, C08G 65/26

(54) **Doppelmetallcyanid-Katalysatoren für die Herstellung von Polyetherpolyolen**
Bimetallic-cyanide catalysts used for preparing polyether polyols
Catalyseurs de cyanure bimétallique utilisés pour préparer des polyols de polyether

(30) Priorität: 19.02.1999 DE 19906985
(43) Veröffentlichungstag der Anmeldung: 23.08.2000
(73) Patentinhaber: Bayer Aktiengesellschaft, 51368 Leverkusen (DE)
(72) Erfinder: Ooms, Pieter, Dr., 47800 Krefeld (DE); Hofmann, Jörg, Dr., 47829 Krefeld (DE); Gupta, Pramod, Dr., 50181 Bedburg (DE); Groenendaal, Lambertus, Dr., 5971 DJ Grubbenvorst (NL)

(56) Entgegenhaltungen:
- DE-A- 19 730 467
- US-A- 5 714 428
- LUIS A. GODINEZ ET AL.: "Electrochemical and 1H NMR studies on tje complexation of hexacyanoferrate(II) anions by aminocyclodextrins." J. CHEM. SOC., FARADAY TRANS.,, Bd. 92, Nr. 4, 1996, Seiten 645-650, XP000906958
- JONG-TAE LEE ET AL.: "The hydridopentacyanocobaltate anion induced deoxygenation of allylic alcohols using beta-cyclodextrin as a phase transfer agent." TETRAHEDRON LETTERS, Bd. 31, Nr. 29, 1990, Seiten 4101-4104, XP000906959

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wäßrige Lösung eines Metallsalzes mit der wäßrigen Lösung eines Metallcyanidsalzes in Gegenwart eines organischen Komplexliganden, z.B. eines Ethers, umsetzt. In einer typischen Katalysatorpräparation werden beispielsweise wäßrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wäßriger Glyme-Lösung wird ein aktiver Katalysator der allgemeinen Formel

Zn₃[Co(CN)₆]₂ · x ZnCl₂ · yH₂O · z Glyme

erhalten (siehe z.B. EP-A 700 949). Aus DE-A 19 730 467 gehen DMC-Katalysatoren hervor, die als organischen Komplexliganden einen Alkohol, Aldehyd, Ester, Harnstoff, ein ketoin, amid, Nitril oder sulfid enthalten.

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, daß die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, daß DMC-Katalysatoren, die ein Cyclodextrin als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) einen oder mehrere, vorzugsweise einen, von c) verschiedenen organischen Komplexliganden, und
c) ein oder mehrere, vorzugsweise ein, Cyclodextrin

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, daß die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z} ,

worin
M wie in Formel (I) und
M' wie in Formel (II) definiert ist, und
x, x', y und z ganzzahlig und so gewählt sind, daß die Elektronenneutralität der Doppelmetallcyanidverbindung gegeben ist.
Vorzugsweise ist
x= 3, x' = 1, y = 6 und z= 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, an Cyclodextrin c).

Für die Herstellung der erfindungsgemäßen Katalysatoren geeignete Cyclodextrine c) sind z.B. unsubstituierte Cyclodextrine oder deren Ester-, Alkylether-, Hydroxyalkylether-, Alkoxycarbonylalkylether- und Carboxyalkyletherderivate oder deren Salze. Cyclodextrine sind Cyclohexa-, Cyclohepta- oder Cyclooctaamylosen mit 6, 7 oder 8 1,4-verknüpften Glucose-Einheiten, die beim Abbau von Stärke durch Bacillus macerans oder Bacillus circulans unter Einwirkung von Cyclodextringlycosyltransferase entstehen, wie beispielsweise α-, β-, γ- oder δ-Cyclodextrin.

Für die Cyclodextrinester als Carbonsäurekomponente geeignet sind Aryl-, Aralkylund Alkylcarbonsäuren mit 2 bis 30 C-Atomen, bevorzugt 2 bis 24 C-Atomen, besonders bevorzugt 2 bis 20 C-Atomen, bevorzugt Aralkyl- und Alkylcarbonsäuren, besonders bevorzugt Alkylcarbonsäuren.

Als Alkylkomponente für die Cyclodextrinalkylether, -hydroxyalkylether, alkoxycarbonylalkylether und -carboxyalkylether kommen lineare oder verzweigte Alkylgruppen mit 1 bis 30 C-Atomen, bevorzugt 1 bis 24 C-Atomen, besonders bevorzugt 1 bis 20 C-Atomen in Frage.

Bevorzugt eingesetzte Cyclodextrine sind α-, β- und γ-Cyclodextrine und deren Mono-, Di- und Triether, Mono-, Di- und Triester oder Monoester/diether, die in der Regel durch Veretherung von α-, β- und γ-Cyclodextrinen mit Alkylierungsmitteln wie beispielsweise Dimethylsulfat oder Alkylhalogeniden mit 1 bis 30 C-Atomen wie beispielsweise Methyl-, Ethyl-, Propyl-, Butyl-, Pentyl-, Hexyl-, Heptyl-, Octylchlorid, -bromid oder -jodid und/oder Veresterung mit Essigsäure oder Bernsteinsäure in Gegenwart von Säuren erhalten werden.

Besonders bevorzugt sind Methyl-α-cyclodextrin, Methyl-ß-cyclodextrin, Methyl-γ-cyclodextrin, Ethyl-β-cyclodextrin, Butyl-α-cyclodextrin, Butyl-β-cyclodextrin, Butyl-γ-cyclodextrin, 2,6-Dimethyl-a-cyclodextrin, 2,6-Dimethyl-β-cyclodextrin, 2,6-Dimethyl-γ-cyclodextrin, 2,6-Diethyl-β-cyclodextrin, 2,6-Dibutyl-β-cyclodextrin, 2,3,6-Trimethyl-α-cyclodextrin, 2,3,6-Trimethyl-β-cyclodextrin, 2,3,6-Trimethyl-γ-cyclodextrin, 2,3,6-Trioctyl-α-cyclodextrin, 2,3,6-Trioctyl-β-cyclodextrin, 2,3,6-Triacetyl-α-cyclodextrin, 2,3,6-Triacetyl-β-cyclodextrin, 2,3,6-Triacetyl-γ-cyclodextrin, (2-Hydroxy)propyl-α-cyclodextrin, (2-Hydroxy)propyl-β-cyclodextrin, (2-Hydroxy)-propyl-y-cyclodextrin, teilweise oder vollständig acetyliertes und succinyliertes α-, β- oder γ-Cyclodextrin, 2,6-Dimethyl-3-acetyl-β-cyclodextrin oder 2,6-Dibutyl-3-acetyl-β-cyclodextrin.

Methoden zur Herstellung von Cyclodextrinen sind allgemein gut bekannt und beispielsweise ausführlich beschrieben in "Römpp Lexikon Chemie", 10. Auflage, Stuttgart/New York 1997, S.845 ff und Chemical Reviews 98 (1998) 1743.

Es können auch beliebige Mischungen der vorgenannten Cyclodextrine eingesetzt werden.

Die Analyse der Katalysatorzusammensetzung erfolgt üblicherweise mittels Elementaranalyse, Thermogravimetrie oder extraktiver Entfernung des Cyclodextrinanteils mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren enthaltend
a) Zinkhexacyanocobaltat (III),
b) tert.-Butanol und
c) ein Cyclodextrin

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II) β) von organischen Komplexliganden b), die von Cyclodextrin verschieden sind und γ) Cyclodextrin.

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wäßrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wäßrigen Lösungen und den organischen Komplexliganden b) unter starkem Rühren zu vermischen. Die gebildete Suspension wird üblicherweise anschließend mit dem Cyclodextrin c) behandelt. Das Cyclodextrin c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wäßrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wäßrigen Waschlösung zwischen 40 und 80 Gew.-%, bezogen auf die Gesamtlösung. Weiterhin ist es vorteilhaft, der wäßrigen Waschlösung etwas Cyclodextrin, bevorzugt im Bereich zwischen 0,5 und 5 Gew.-%, bezogen auf die Gesamtlösung, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nicht wäßrige Lösungen zu verwenden, z.B. eine Mischung aus organischem Komplexliganden und Cyclodextrin.

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2.000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1.000 bis 50.000 g/mol, besonders bevorzugt im Bereich von 2.000 bis 20.000 g/mol.

Die Polyaddition kann kontinuierlich oder diskontinuierlich, z.B. in einem Batchoder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne daß die Produktqualitäten des erhaltenen Polyurethans nachteilig beeinflußt werden.

### Beispiele

### Katalysatorpräparation

### Beispiel A Herstellung eines DMC-Katalysators mit Einsatz von 2,6-Dimethyl-β-cyclodextrin (Katalysator A).

Zu einer Lösung aus 4 g (12 mmol) Kaliumhexacyanocobaltat in 70 ml destilliertem Wasser gibt man unter starkem Rühren (24.000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24.000 U/min). Dann wird eine Mischung aus 1 g eines 2,6-Dimethyl-β-cyclodextrins Beta W7 M 1,8 (Wacker-Chemie GmbH, D-81737 München), 1 g tert.-Butanol und 100 destilliertem Wasser zugegeben und 3 min gerührt (1.000 U/min). Der Feststoff wird durch eine Filtration isoliert, dann 10 min mit einer Mischung aus 70 g tert.-Butanol, 30 g destilliertem Wasser und 1 g des obigen 2,6-Dimethyl-β-cyclodextrins gerührt (10.000 U/min) und erneut filtriert. Abschließend wird noch einmal 10 min mit einer Mischung aus 100 g tert.-Butanol und 0,5 g des obigen 2,6-Dimethyl-β-cyclodextrins gerührt (10.000 U/min). Nach Filtration wird der Katalysator bei 50°C und Normaldruck bis zur Gewichtskonstanz getrocknet.
Ausbeute an getrocknetem, pulverförmigem Katalysator: 5,4 g
Elementaranalyse, Thermogravimetrische Analyse und Extraktion:
Cobalt = 10,5 Gew.-%, Zink = 24,4 Gew.-%, tert.-Butanol = 10,0 Gew.-%, 2,6-Dimethyl-ß-cyclodextrin = 13,8 Gew.-%

### Beispiel B Herstellung eines DMC-Katalysators mit Einsatz von 2,6-Dimethyl-α-cyclodextrin (Katalysator B).

Es wurde verfahren wie in Beispiel A, jedoch wurde 2,6-Dimethyl-α-cyclodextrin Alpha W 6 M 1,8 (Wacker-Chemie GmbH, D-81737 München) anstelle des 2,6-Dimethyl-β-cyclodextrins aus Beispiel A eingesetzt.
Ausbeute an getrocknetem, pulverförmigem Katalysator: 5,5 g
Elementaranalyse, Thermogravimetrische Analyse und Extraktion:
Cobalt = 11,0 Gew.-%, Zink = 25,7 Gew.-%, tert.-Butanol = 4,4 Gew.-%, 2,6-Dimethyl-a-cyclodextrin = 12,3 Gew.-%

### Beispiel C Herstellung eines DMC-Katalysators mit Einsatz von 2,3,6-Triacetyl-β-cyclodextrin (Katalysator C).

Es wurde verfahren wie in Beispiel A, jedoch wurde 2,3,6-Triacetyl-β-cyclodextrin Beta W 7 TA 3,0 (Wacker-Chemie GmbH, D-81737 München) anstelle des 2,6-Dimethyl-β-cyclodextrins aus Beispiel A eingesetzt.
Ausbeute an getrocknetem, pulverförmigem Katalysator: 4,9 g
Elementaranalyse, Thermogravimetrische Analyse und Extraktion:
Cobalt = 13,4 Gew.-%, Zink = 29,6 Gew.-%, tert.-Butanol = 11,4 Gew.-%, 2,3,6-Triacetyl-β-cyclodextrin = 6,4 Gew.-%

### Beispiel D Herstellung eines DMC-Katalysators mit Einsatz von γ-Cyclodextrin (Katalysator D)

Es wurde verfahren wie in Beispiel A, jedoch wurde γ-Cyclodextrin (Fluka Chemie AG, CH-9471 Buchs) anstelle des 2,6-Dimethyl-β-cyclodextrins aus Beispiel A eingesetzt.
Ausbeute an getrocknetem, pulverförmigem Katalysator: 6,0 g
Elementaranalyse, Thermogravimetrische Analyse und Extraktion:
Cobalt= 10,2 Gew.-%, Zink = 23,9 Gew.-%, tert.-Butanol = 9,9 Gew.-%, γ-Cyclodextrin = 15,0 Gew.-%

### Beispiel E Herstellung eines DMC-Katalysators mit Einsatz von 2,3-Dimethyl-γ-cyclodextrin (Katalysator E)

Es wurde verfahren wie in Beispiel A, jedoch wurde 2,6-Dimethyl-γ-cyclodextrin Gamma W 8 M 1,8 (Wacker-Chemie GmbH, D-81737 München) anstelle des 2,6-Dimethyl-β-cyclodextrins aus Beispiel A eingesetzt.
Ausbeute an getrocknetem, pulverförmigem Katalysator: 5,5 g
Elementaranalyse, Thermogravimetrische Analyse und Extraktion:
Cobalt = 12,7 Gew.-%, Zink = 30,0 Gew.-%, tert.-Butanol = 10,1 Gew.-%, 2,6-Dimethyl-γ-cyclodextrin = 11,1 Gew.-%,

### Beispiel F (Vergleich) Herstellung eines DMC-Katalysators mit Einsatz von tert.-Butanol ohne Cyclodextrin (Katalysator F, Synthese gemäß JP-A 4 145 123)

Zu einer Lösung aus 4 g (12 mmol) Kaliumhexacyanocobaltat in 75 ml destilliertem Wasser gibt man unter starkem Rühren (24.000 U/min) eine Lösung aus 10 g (73,3 mmol) Zinkchlorid in 15 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24.000 U/min). Der Feststoff wird durch eine Filtration isoliert, dann 10 min mit 125 g einer Mischung aus tert.-Butanol und destilliertem Wasser (70/30; w/w) gerührt (10.000 U/min) und erneut filtriert. Abschließend wird noch einmal 10 min mit 125 g tert.-Butanol gerührt (10.000 U/min). Nach Filtration wird der Katalysator bei 50°C und Normaldruck bis zur Gewichtskonstanz getrocknet.
Ausbeute an getrocknetem, pulverförmigem Katalysator: 3,08 g
Elementaranalyse:
Cobalt = 13,6 Gew.-%, Zink = 27,4 Gew.-%, tert.-Butanol = 14,2 Gew.-%,

### Herstellung von Polyetherpolyolen

### Allgemeine Durchführung

In einem 500 ml Druckreaktor werden 50 g Polypropylenglykol-Starter (zahlenmittleres Molekulargewicht 1.000 g/mol) und 4-5 mg Katalysator (20-25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1 Herstellung von Polyetherpolyol mit Katalysator A (20 ppm)

| | | |
|---|---|---|
| Induktionszeit | | 197 min |
| Propoxylierungszeit | | 281 min |
| Gesamtreaktionszeit | | 478 min |
| Polyetherpolyol | OH-Zahl (mg KOH/g) | 29,9 |
| | Doppelbindungsgehalt (mmol/kg) | 8 |
| | Viskosität 25°C (mPas) | 1022 |

Ohne Entfernung des Katalysators beträgt der Metallgehalt im Polyol: Zn = 5 ppm, Co = 3 ppm.

### Beispiel 2 Herstellung von Polyetherpolyol mit Katalysator B (25 ppm)

| | | |
|---|---|---|
| Induktionszeit | | 175 min |
| Propoxylierungszeit | | 319 min |
| Gesamtreaktionszeit | | 494 min |
| Polyetherpolyol | OH-Zahl (mg KOH/g) | 30,3 |
| | Doppelbindungsgehalt (mmol/kg) | 10 |
| | Viskosität 25°C (mPas) | 889 |

### Beispiel 3 Herstellung von Polyetherpolyol mit Katalysator C (25 ppm)

| | | |
|---|---|---|
| Induktionszeit | | 173 min |
| Propoxylierungszeit | | 384 min |
| Gesamtreaktionszeit | | 557 min |
| Polyetherpolyol | OH-Zahl (mg KOH/g) | 30,7 |
| | Doppelbindungsgehalt (mmol/kg) | 8 |
| | Viskosität 25°C (mPas) | 926 |

### Beispiel 4 Herstellung von Polyetherpolyol mit Katalysator D (25 ppm)

| | | |
|---|---|---|
| Induktionszeit | | 213 min |
| Propoxylierungszeit | | 215 min |
| Gesamtreaktionszeit | | 428 min |
| Polyetherpolyol | OH-Zahl (mg KOH/g) | 30,0 |
| | Doppelbindungsgehalt (mmol/kg) | 8 |
| | Viskosität 25°C (mPas) | 901 |

### Beispiel 5 Herstellung von Polyetherpolyol mit Katalysator E (25 ppm)

| | | |
|---|---|---|
| Induktionszeit | | 213 min |
| Propoxylierungszeit | | 414 min |
| Gesamtreaktionszeit | | 627 min |
| Polyetherpolyol | OH-Zahl (mg KOH/g) | 30,3 |
| | Doppelbindungsgehalt (mMol/kg) | 9 |
| | Viskosität 25 °C (mPas) | 931 |

### Beispiel 6 (Vergleich)

Katalysator F (25 ppm) zeigt unter den oben beschriebenen Reaktionsbedingungen auch nach 10 h Induktionszeit noch keine Aktivität.

Beispiele 1-5 zeigen, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

## Patentansprüche

1. Doppelmetallcyanid (DMC)-Katalysator enthaltend
a) eine oder mehrere Doppelmetallcyanid-Verbindungen,
b) einen oder mehrere, von c) verschiedene, organische Komplexliganden, und
c) ein oder mehrere Cyclodextrine

2. DMC-Katalysator nach Anspruch 1, zusätzlich enthaltend d) Wasser und/oder e) wasserlösliches Metallsalz.

3. DMC-Katalysator nach Anspruch 1 oder 2, worin die Doppelmetallcyanid-Verbindung Zinkhexacyanocobaltat(III) ist.

4. DMC-Katalysator nach einem der Ansprüche 1 bis 3, worin der organische Komplexligand tert.-Butanol ist.

5. DMC-Katalysator nach einem der Ansprüche 1 bis 4, worin der Katalysator 1 bis 80 Gew.-%, vorzugsweise 1 bis 40 Gew.-% eines Cyclodextrins enthält.

6. DMC-Katalysator nach einem der Ansprüche 1 bis 5, worin das Cyclodextrin c) 2,6-Dimethyl-α-cyclodextrin, 2,6-Dimethyl-β-cyclodextrin, 2,6-Dimethyl-γ-cyclodextrin, 2,3,6-Trimethyl-β-cyclodextrin, Acetyl-β-cyclodextrin, 2,3,6-Triacetyl-α-cyclodextrin, 2,3,6-Triacetyl-β-cyclodextrin oder 23,6-Triacetyl-γ-cyclodextrin ist.

7. Verfahren zur Herstellung eines DMC-Katalysators, enthaltend die Schritte
i) Umsetzung in wäßriger Lösung von
α) Metallsalzen mit Metallcyanidsalzen
β) organischen Komplexliganden, die von Cyclodextrin verschieden sind, und
γ) Cyclodextrin,
ii) Isolieren, Waschen und Trocknen des in Schritt i) erhaltenen Katalysators.

8. Verfahren zur Herstellung von Polyetherpolyolen durch Polyaddition von Alkylenoxiden an aktive Wasserstoffatome aufweisenden Starterverbindungen, in Gegenwart eines oder mehrerer DMC-Katalysatoren nach einem der Ansprüche 1 bis 6.

9. Verwendung eines oder mehrerer DMC-Katalysatoren nach einem der Ansprüche 1 bis 6, zur Herstellung von Polyetherpolyolen durch Polyaddition von Alkylenoxiden an aktive Wasserstoffatome aufweisende Starterverbindungen.

## Claims

1. A double metal cyanide (DMC) catalyst containing
a) one or more double metal cyanide compounds,
b) one or more organic complex ligands which differ from c), and
c) one or more cyclodextrins.

2. A DMC catalyst according to Claim 1, also containing d) water and/or e) a watersoluble metal salt.

3. A DMC catalyst according to Claim 1 or 2, in which the double metal cyanide compound is zinc hexacyanocobaltate(III).

4. A DMC catalyst according to one of Claims 1 to 3, in which the organic complex ligand is tert-butanol.

5. A DMC catalyst according to one of Claims 1 to 4, in which the catalyst contains 1 to 80 wt.%, preferably 1 to 40 wt.% of a cyclodextrin.

6. A DMC catalyst according to one of Claims 1 to 5, in which the cyclodextrin c) is 2,6-dimethyl-α-cyclodextrin, 2,6-dimethyl-β-cyclodextrin, 2,6-dimethyl-γ-cyclodextrin, 2,3,6-trimethyl-β-cyclodextrin, acetyl-β-cyclodextrin, 2,3,6-triacetyl-α-cyclodextrin, 2,3,6-triacetyl-β-cyclodextrin, or 2,3,6-triacetyl-γ-cyclodextrin.

7. A process for preparing a DMC catalyst, comprising the steps:
i) Reaction in aqueous solution of
α) metal salts with metal cyanide salts
β) organic complex ligands, which differ from cyclodextrin, and
γ) cyclodextrin,
ii) isolation, washing and drying of the catalyst obtained in step i).

8. A process for preparing polyetherpolyols by the polyaddition of alkylene oxides to starter compounds which contain active hydrogen atoms in the presence of one or more DMC catalysts according to one of Claims 1 to 6.

9. The use of one or more DMC catalysts according to one of Claims 1 to 6 to prepare polyetherpolyols by the polyaddition of alkylene oxides to starter compounds which contain active hydrogen atoms.

## Revendications

1. Catalyseur de cyanure bimétallique (DMC) contenant :
a) un ou plusieurs composés cyanure bimétallique,
b) un ou plusieurs ligands-complexants organiques différents de c), et
c) une ou plusieurs cyclodextrines.

2. Catalyseur DMC suivant la revendication 1, contenant en outre d) de l'eau et/ou e) un sel métallique soluble dans l'eau.

3. Catalyseur DMC suivant la revendication 1 ou 2, où le composé cyanure bimétallique est l'hexacyanocobaltate (III) de zinc.

4. Catalyseur DMC suivant l'une quelconque des revendications 1 à 3, où le ligand-complexant est le t-butanol.

5. Catalyseur DMC suivant l'une quelconque des revendications 1 à 4, où le catalyseur contient 1 à 80% en poids, de préférence 1 à 40% en poids d'une cyclodextrine.

6. Catalyseur DMC suivant l'une quelconque des revendications 1 à 5, où la cyclodextrine c) est la 2,6-diméthyl-α-cyclodextrine, la 2,6-diméthyl-β-cyclodextrine, la 2,6-diméthyl-γ-cyclodextrine, la 2,3,6-triméthyl-β-cyclodextrine, l'acétyl-β-cyclodextrine, la 2,3,6-triacétyl-α-cyclodextrine, la 2,3,6-triacétyl-β-cyclodextrine ou la 2,3,6-triacétyl-γ-cyclodextrine.

7. Procédé de préparation d'un catalyseur DMC, comprenant les étapes consistant à :
i) faire réagir en solution aqueuse :
α) les sels métalliques avec les sels de cyanure métallique,
β) les ligands-complexants organiques, qui sont différents de la cyclodextrine, et
γ) la cyclodextrine ;
ii) isoler, laver et sécher le catalyseur obtenu à l'étape i).

8. Procédé de préparation de polyéther-polyols par polyaddition d'oxydes d'alcoylène sur des composés starter contenant des atomes d'hydrogène actifs, en présence d'un ou de plusieurs catalyseurs DMC suivant l'une quelconque des revendications 1 à 6.

9. Utilisation d'un ou de plusieurs catalyseurs DMC suivant l'une quelconque des revendications 1 à 6, pour la préparation de polyéther-polyols par polyaddition d'oxydes d'alcoylène sur des composés starter contenant des atomes d'hydrogène actifs.
